# EUROPÄISCHE PATENTANMELDUNG

(11) **EP 0 568 168 A1**
(43) Veröffentlichungstag der Anmeldung: **03.11.1993**
(21) Anmeldenummer: 93250109.1
(22) Anmeldetag: 16.04.1993
(51) Int. Cl.: B65G 47/68, B65G 47/31

(54) **Vielzoniger Entmischer bzw. Sortierer**

(30) Priorität: 01.05.1992 US 877655
(71) Anmelder: MANNESMANN Aktiengesellschaft, D-40027 Düsseldorf (DE)
(72) Erfinder: LeMay, Curtis Edward, Shelbyville, Michigan 49344 (US); Hergenrother, James F., Rockford, Michigan 49341 (US)
(74) Vertreter: Meissner, Peter E., Dipl.-Ing.

(57) **Zusammenfassung**

Die Erfindung betrifft einen Förderer zum Entmischen und Abladen von Artikeln, die von Seite - zu - Seite Quellen in zufälliger Ordnung und Orientierung aufgenommen werden in einer einzelnen Reihe. Der Förderer weist außer parallelen Seiten-Rahmenbauteil (12,12a) eine Vielzahl von Walzen auf, die die Transportoberfläche für Artikel bilden, wobei diese Walzen schräg bezogen auf die Seitenrahmenbauteile ausgerichtet sind. Ferner sind Rahmenbauteile (21) vorgesehen, die unterschiedlich ausgerichtet sind und die die Transportoberfläche des Förderers in eine Vielzahl von Transportzonen aufteilt.

## Beschreibung

Die Erfindung sieht einen Entmischer vor, welcher in der Lage ist, eine größere Anzahl von Artikeln pro Zeiteinheit auszurichten, selbst wenn die Länge der Einheit reduziert worden ist. Die Ausführung verwendet ebenfalls die gesamte Länge der Einheit als aktiven Ausrichtungsmechanismus. Weiterhin initiiert sie eine Trennung durch mehrfache Geschwindigkeitsdifferenzierung sofort am Eintritt der Artikel in die Einheit. Sie sieht ebenfalls eine vereinfachte Konstruktion vor, welche sowohl den Aufbau als auch die Funktion erleichtert, wenn letztereS notwendig ist.

In vielen förderanlagen, insbesondere solchen in großen Artikel-Verlade- oder Überführungsterminals, steigt das Volumen der zu bewältigenden Artikel beständig an. Zur Anpassung daran ist der Raum vergrößert worden, ist die Mechanisierung gesteigert worden und ist die Rate, mit welcher jeder individuelle Artikel bearbeitet wird, gesteigert worden. Das angestiegene Volumen muß, wenn es nicht einen erheblichen Anstieg im Terminalbereich und beim Personal und somit der Bearbeitungskosten pro Einheit bewirken soll, durch neue Anlagentypen bearbeitet werden, welche zu wesentlich höheren Arbeitsgeschwindigkeiten fähig sind. Um dies zu vermeiden, muß jeder Schritt des Prozesses effizienter durchgeführt werden, um eine erhöhte Bearbeitungszeit zu vermeiden. Dazu muß der Artikeldurchsatz zur Bearbeitung des Volumens beschleunigt werden. Die Erfindung erreicht dies durch Schaffung eines Artikel-Entmischers, welcher eine signifikant vergrößerte Durchsatzkapazität aufweist. Dieser umfaßt Mittel, durch welche die Artikel effizient in einer einzigen Reihe mit einer wesentlich höheren Rate pro Minute abgeladen werden können, ohne daß die Notwendigkeit besteht, die Länge der Einheit zu vergrößern, oder er kann verwendet werden, um einen geringeren Volumenanstieg mit einer wesentlich reduzierten Länge der Einheiten zu bearbeiten.

Die Antriebs- und Transportoberfläche für die Artikel ist in eine Vielzahl von Seite-an-Seite Bahnen aufgeteilt, von denen jede separat mit einer unterschiedlichen Geschwindigkeit angetrieben ist. Die Artikel werden sofort am Eintritt in die Einheit auf die Geschwindigkeit differenziert, mit welcher sie durch die Einheit bewegt werden, wobei der Eintritt zur Bahn mit der höchsten Geschwindigkeit benachbart zur einen Seite der Einheit liegt, wobei die verbleibende Breite der Einheit in mindestens zwei weitere Eintrittsbahnen aufgeteilt ist, von denen jede eine geringere Geschwindigkeit aufweist als die zu ihr Benachbarte und die zwischen ihr und der einen Seite Liegende. Diese Bahnen fusionieren schließlich, wenn das Abladeende erreicht wird, indem die durch alle Bahnen bearbeiteten Artikel auf die Seite der Einheit bewegt werden, welche am Punkte des Artikeleintritts unterhalb der langsameren Bahnen liegt. Wenn die Artikel die Abladestelle erreichen, sind sie durch die Anlage derart gehandhabt worden, daß sich alle Artikel mit derselben Geschwindigkeit bewegen.

Die Erfindung wird nun anhand der Figuren naher beschrieben, wobei:
Fig.1 eine Draufsicht auf den Entmischer ist, bei der die Walzen in Phantomweise dargestellt sind, um die in gestrichelten Linien dargestellten Antriebseinheiten unterhalb der Transportwalzen für die Artikel offenbaren zu können;
Fig.2 eine vergrößerte, fragmentarische Draufsicht auf den Walzen-Lagerungsrahmen am Artikel-Empfangsende der Einheit ist, bei der die Transportwalzen für die Artikel und die Antriebsbänder nicht dargestellt sind;
Fig.3 eine Ansicht ähnlich zu der in Fig.1 ist, welche nur solche Walzen zeigt, die am Beginn und am Ende einer jeden Geschwindigkeits-Änderungszone angeordnet sind;
Fig.4 eine fragmentarische, geschnittene, vergrößerte Ansicht entlang der Schnittebene IV-IV in Fig.3 ist;
Fig.5 eine fragmentarische, geschnittene, vergrößerte Ansicht entlang der Schnittebene V-V in Fig.3 ist;
Fig.6 eine fragmentarische Draufsicht auf eine Walzenlagerung an einem Ende des Entmischers ist;
Fig.7 eine geschnittene, vergrößerte Ansicht einer typischen Walzenlagerung an einem der Seitenrahmenbauteile ist;
Fig.8 eine Draufsicht auf die Bodenhälfte einer typischen Walzenlagerung ist;
Fig.9 eine Seitenansicht der in Fig.8 dargestellten Walzenlagerungshälfte ist;
Fig.10 eine Draufsicht auf den Abschlußdeckel für die in Fig.8 dargestellte Walzenlagerung ist;
Fig.11 eine vergrößerte Seitenansicht des in Fig.10 dargestellten Abschlußdeckels ist; und
Fig.12 eine fragmentarische Seitenansicht eines modifizierten singulierenden Bandes ist, welches verwendet wird, wenn die Richtung der Artikelbewegung auf dem Entmischer umgekehrt wird.

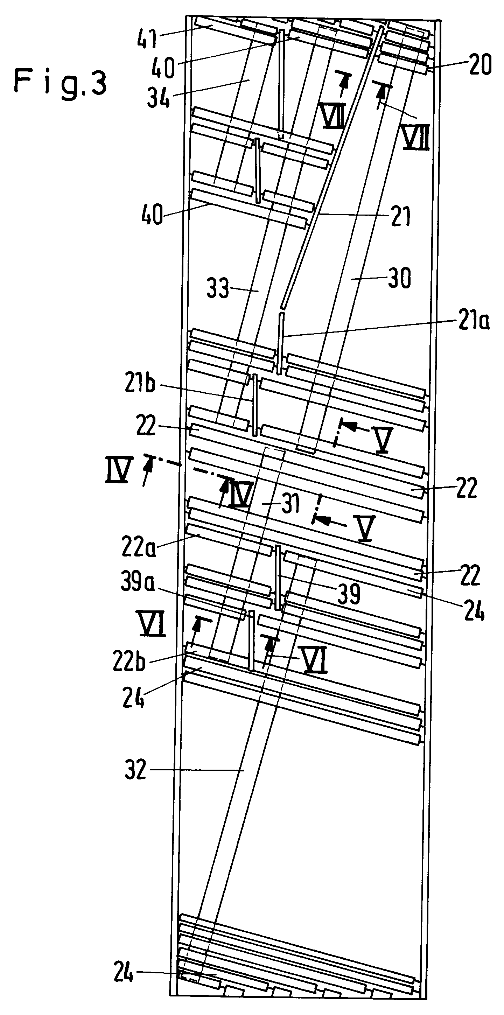

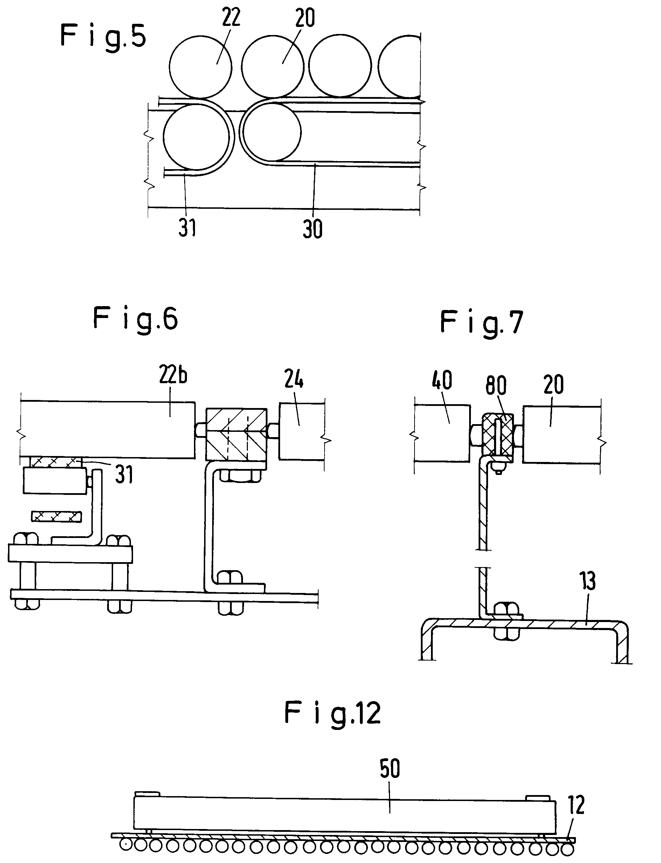

Die Bezugsnummer 10 bezieht sich auf eine Fördereinheit, welche ausgebildet ist, um in einem Fördersystem zum Entmischen und zur fluchtenden Ausrichtung von Artikeln, die in zufälliger und unorganisierter Weise aufgenommen werden, installiert zu werden. Der Förderer weist eine Lagerungs- und Transportoberfläche 11 für die Artikel auf, welche aus einer Vielzahl von Walzen gebildet ist. Die Transportoberfläche 11 wird an jeder Seite durch Rahmenbauteile 12 und 12a abgestützt. Diese Rahmenbauteile sind Kanäle, welche in geeigneten Intervallen durch Querträger 13 (Fig. 2) verbunden sind, was eine bei Förderern in konventioneller Weise verwendete Konstruktion ist. Die Rahmenbauteile haben jeweils einen sich nach innen erstreckenden Flansch 14, welcher unter dem Flansch 15 des zum Niederhalten der Walzachse verwendeten Bauteils 18 (Fig. 4) angeordnet ist. Zwischen dem Flansch 15 des Bauteils 18 sind geeeignete Lagerblöcke 16 und 16a angeordnet, um den Enden der Wellen 17, die die Walzen tragen, einen Sitz zu geben und um diese abzustützen.

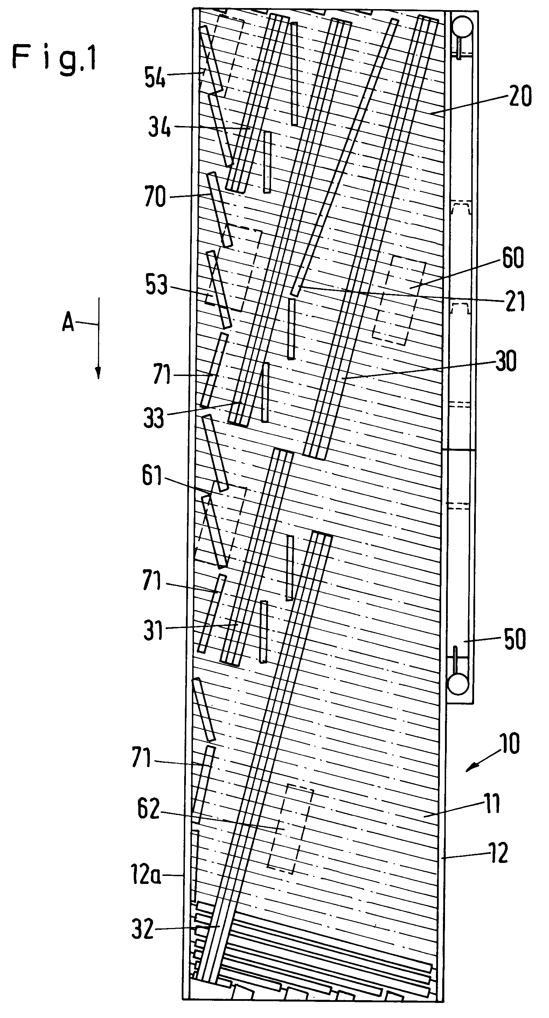

Die Walzen, welche die Förderoberfläche des Entmischers bilden, sind in Gruppen angeordnet, von denen jede über eine getrennte Energiequelle mit einer unterschiedlichen Geschwindigkeit angetrieben wird. Wie in den Fig.1 und 3 dargestellt ist, wird die erste Walzengruppe 20 an ihrem einen Ende durch das Rahmenbauteil 12 und an ihrem anderen Ende durch den ersten zwischenliegenden Walzenlagerungsrahmen 21, einschließlich seiner Regelungsabschnitte 21a und 21b (Fig.1 und 3) abgestützt. Diese Walzengruppe läuft in die zweite Walzengruppe 22 aus. Artikel, welche über die Walzengruppe 22 hinweggelaufen sind, erreichen die letzte Walzengruppe 24. Die Walzen der ersten Gruppe 20 werden mit einer Geschwindigkeit angetrieben, welche ausgelegt ist, um die Artikel mit 300 Fuß pro Minute zu bewegen. Die Walzen der zweiten Gruppe 22 werden mit einer Geschwindigkeit angetrieben, die ebenfalls ausgelegt ist, um die Artikel mit 300 Fuß pro Minute zu transportieren, und die Walzen der Gruppe 24 werden mit einer solchen Geschwindigkeit angetrieben, daß die Artikel mit 400 Fuß pro Minute bewegt werden. Diese festgelegten Geschwindigkeiten sind nur exemplarisch und können höher oder niedriger sein. Jedoch ist die Differenzierung der Geschwindigkeit zwischen den einzelnen Gruppen ein grundsätzliches Merkmal der Erfindung.

Die Walzen der Walzengruppe 20 werden über das Antriebsband 30 angetrieben. Die Walzen der Walzengruppe 22 werden über das Band 31 angetrieben, und die Walzen der Walzengruppe 24 werden über das Band 32 (Fig. 3) angetrieben. Jedes dieser Bänder wird über einen separaten Primärantrieb angetrieben, welcher durch und unterhalb des Rahmens des Entmischers gelagert ist.

Artikel, welche am Entmischer an der Stelle der Förderoberfläche eintreten, welche nicht durch die Walzengruppe 20 eingenommen wird, werden mit unterschiedlichen Geschwindigkeiten angetrieben. Diese Walzen sind über die walzenlagerungsrahmen 21, 21a und 21b von den Walzen der Walzengruppe 20 getrennt.

Die Walzengruppen, die diejenigen Artikel aufnehmen, welche nicht bei der Walzengruppe 20 eingetreten sind, sind in zwei Wege für die Artikel aufgeteilt, wobei deren Anfangswalzen bei unterschiedlichen Geschwindigkeiten operieren, die niedriger sind als die der Walzengruppe 20. Die Walzen der Walzengruppe 40, die direkt benachbart zur Walzengruppe 20 und am Aufnahmeende des Entmischers angeordnet sind, werden über das Band 33 mit einer Geschwindigkeit angetrieben, welche geringer ist als diejenige der Walzen 20. Diese Walzen sind derart angetrieben, daß die Artikel mit 180 Fuß pro Minute bewegt werden. Dies kann eine Beschleunigung der Artikel notwendig machen. Die über die Walzengruppe 40 laufenden Artikel werden auf die Walzen der zweiten Gruppe 22, welche über das Band 31 angetrieben werden, abgeladen.

Die Artikel, die am weitesten von denjenigen entfernt sind, welche auf die Walzengruppe 20 auflaufen, laufen auf die durch das Band 34 angetriebene Walzengruppe 41 (bspw. links in Fig.3) auf. Das Band treibt die Walzen der Gruppe 41 vorzugsweise mit einer Geschwindigkeit an, die die Artikel auf 85 Fuß pro Minute beschleunigt, wodurch diese präpariert werden, um auf die Walzen der Walzengruppe 40 abgeladen zu werden und um mit den Artikeln zu fusionieren, die über das Band 33 angetrieben werden. Nach der Fusionierung mit den Artikeln auf den Walzen, die über das Band 33 angetrieben werden, werden alle darauf befindlichen Artikel beschleunigt, um bei einer Geschwindigkeit von ungefähr 180 Fuß pro Minute auf die über das Band 31 angetriebenen Walzen 22 abgeladen zu werden, welche die Artikel auf 300 Fuß pro Minute beschleunigen.

Die Walzen der Gruppe 22 erstrecken sich nur über eine kurze Distanz zum Transport derjenigen Artikel, die durch die Walzengruppe 20 transportiert worden sind. Jedoch laufen die Walzen der Gruppe 22 weiter und beschleunigen die Artikel, welche von den Walzengruppen 40 und 41 aufgenommen worden sind, für ein zusätzliches Zeitintervall, um sie auf die zur Fusionierung mit den Artikeln, welche durch die Walzen der Gruppe 20 transportiert worden sind, notwendige Geschwindigkeit zu bringen. Dies geschieht durch die Walzengruppen 22a und 22b, die sich jeweils zwischen dem Rahmen 12a und den kurzen Unterrahmen 39 und 39a erstrecken. Am Ende des Unterrahmens 39a laufen die über die Walzen 22b transportierten Artikel in die letzte Transportzone ein, welche durch die Walzen 24 gebildet ist. Die Walzen 24 sind derart angetrieben, daß sie die Artikel auf eine Geschwindigkeit von 400 Fuß pro,, Minute beschleunigen, bei welcher diese von dem Entmischer abgeladen werden.

Diese Konstruktion des Entmischers sieht ein Mittel zur Angleichung der Geschwindigkeiten von den Artikeln vor, die bei sehr unterschiedlichen und weit gestreuten Geschwindigkeiten aufgenommen werden. Dadurch ist das Problem der Artikelbeschädigung gelöst worden, welches vorher aufgetreten ist, als Versuche unternommen worden sind, Artikel mit unterschiedlichen Formen zu entmischen und zu beschleunigen, die mit solch einem weiten Bereich von Geschwindigkeiten in die Anlage eingetreten sind.

Dieses geschieht ebenfalls ohne Verwendung von inneren Barrieren. Stattdessen hängt diese Angleichung vollständig von der Anordnung der Walzen in Gruppen ab, deren Formen und Schemen die Artikel auf getrennten, unterschiedlichen Geschwindigkeiten halten, bis die Geschwindigkeiten eine Fusionierung gestatten. In dieser Beziehung ist es wichtig, daß sich keiner der Lagerungsrahmen 21, 21a, 21b, 37, 38, 39 und 39a über die Ebene der oberen Bereiche der Walzen, welche kollektiv die Transportoberfläche 11 des Entmischers bilden, erstreckt, wie dies in den Fig.6 und 7 dargestellt ist.

Einer der Vorzüge der Verwendung von Walzengruppen, die in fortschreitend fusionierenden Transportwegen angeordnet sind, ist die Tatsache der schnellen und abhängigen Orientierung der Artikel nicht nur in der Ausrichtung in einer einzigen Linie entlang einer Seite des Förderers, sondern auch in deren Anordnung in der Form, daß die längeren Achsen aller Artikel in Transportrichtung ausgerichtet sind. Dies wird nicht nur durch den Beschleunigungseffekt der höheren Oberflächengeschwindigkeit der Walzen erreicht, sondern auch durch die Tatsache, daß die gesamte Transportoberfläche gänzlich unbehindert über die Förderoberfläche läuft. Sollte somit ein Ende eines Artikels, welcher nicht schon derart ausgerichtet ist, in Kontakt mit einer Walze oder Walzen kommen, die mit einer der geringeren Zwischengeschwindigkeiten angetrieben werden, so wird sich der Artikel sofort derart drehen, daß sich seine längere Achse über der Entmischeroberfläche in Transportrichtung ausrichten wird. Wegen der hohen Oberflächengeschwindigkeiten der Walzen wird diese Ausrichtung sehr schnell erreicht. Die schnelle Ausrichtung ist sehr wichtig für die Fähigkeit, die Transportgeschwindigkeit der Artikel in der Einheit erhöhen zu können.

Um die Notwendigkeit für die Installation von dualen Förderlinien zu vermeiden, werden die Artikel in einigen Anlagen zu einer zentralen Handhabungsstation gebracht, wo sie für den Transport zu einem bestimmten Lastwagendock identifiziert werden, um dort für den Transport zu den Firmen der Kunden zunächst auf Ladeböcke oder Paletten und dann auf Lastwagen verladen zu werden. In manchen Werken werden die identifizierten Artikel mindestens über einen Teil der Strecke bis zum geeigneten Verladedock über denselben Förderer transportiert. Dies ist möglich, weil die Artikel in einigen großen Lagern während bestimmter Stunden aus dem Lager herausgeholt werden und die Lastwagen zu anderen Zeiten beladen werden. Somit kann durch die Umkehrung der Förderrichtung der Entmischer dazu verwendet werden, die Artikel zu den Lastwagenverladestationen zu bewegen. Zumindest kann aber ein beträchtliches Teilstück des Weges damit bewältigt werden. Wenn die Förderer derart genutzt werden, werden die Drehrichtungen der Walzen des Entmischers umgekehrt, und die Artikel werden zuerst von den Walzen 24 aufgenommen. In diesem Fall wird die Einheit nur als Singulator verwendet und nicht als Einheit sowohl für das Beschleunigen als auch das Singulieren der Artikel. Bei einer solchen Verwendung werden die Bänder 30, 31 und 32 alle mit derselben Geschwindigkeit angetrieben, wodurch die Artikel dazu gebracht werden, sich zum Seitenbauteil 12 zu bewegen und sich zu vereinzeln. Um die Vereinzelung ohne große Verzögerung ihrer Bewegung über die Entmischeroberfläche durchführen zu können, ist entlang der Seite der Oberfläche des Förderers ein Band 50 (Fig.1 und 12) gemeinsam an denjenigen Walzen vorgesehen, die über die Bänder 30, 31 und 32 angetrieben werden, welches mit einer geeigneten Geschwindigkeit von bspw. 295 Fuß pro Minute angetrieben wird. Die Oberfläche des Bandes ist vertikal und überdeckt die Oberfläche der Transportwalzen in ausreichendem Maße, um einen Kontakt zwischen den Artikeln und der Seite des Förderers zu vermeiden. Die Oberflächengeschwindigkeit des Bandes, welche ein wenig geringer ist als die der Walzen, wird die Artikel genügend anstoßen, damit sie zum Zeitpunkt des Abladens von der Einheit vereinzelt sind. Wenn die Artikel die erste der Walzen 22 erreichen, werden sie ausreichend zum Seitenbauteil 12 hin verschoben worden sein, damit ein teilweiser oder totaler Kontakt mit den Walzen dieser Gruppen vermieden wird. Selbst für den Fall, daß dies nicht passiert, werden alle Walzen in diesem Bereich mit derselben Geschwindigkeit angetrieben und die Artikel in ausreichender Weise schnell zur Seitenschiene 12 hinbewegt, so daß sie mit den Walzen auf der anderen Seite der Unterrahmen 39 und 39a nicht in Kontakt treten werden.

Weil die verschiedenen Walzengruppen mit verschiedenen Geschwindigkeiten angetrieben werden, wenn sie in der ersten Art und Weise, d.h. als vielzoniger Entmischer für Artikel, verwendet werden, wird jede Gruppe über einen separaten Primärantrieb (Fig.1) durch einen geeigneten Geschwindigkeitsregler oder -reduzierer (nicht dargestellt) angetrieben. Somit wird das Band 30 für die Walzen 20 über den Primärantrieb 60 angetrieben. Die Primärantriebe 61 und 62 treiben die Bänder 31 und 32 an. Die Bänder 33 und 34 werden über die jeweiligen primärantriebe 53 und 54 angetrieben. Die Walzen 24 werden durch das Band 32 angetrieben. Weil jedes der Bänder separat durch seinen eigenen Primärantrieb angetrieben wird, kann eine Einstellung der Geschwindigkeiten zum Erreichen einer koordinierten und effizienten Bwegung der Artikel üben den Entmischer relativ leicht erzielt werden. Auch brauchen die Antriebe der Bänder 33 und 34 nicht aktiviert zu werden, wenn Teile der Einheit nicht verwendet werden, wie bspw. dann, wenn die Artikelbewegung umgekehrt wird. Keiner dieser Antriebe ist im Detail dargestellt oder beschrieben, weil ihre Konstruktion auf dem Gebiet des Förderwesens genau bekannt ist.

Weil die Walzen aller Gruppen einseitig auf die Artikel wirken, so daß sie sich zum Rahmenbauteil 12a hin bewegen, wenn die Walzen derart angetrieben werden, daß sich die Artikel in Richtung des Pfeils A bewegen, ist der Entmischer mit winkeligen Schienensegmenten 70 ausgerüstet. Diese Segmente sind oben und überlagern die Förderoberfläche und kommen daher mit jedem Artikel in Verbindung, der nahe an die Seitenschiene 12a gelangt. Normalerweise sind diese Segmente alle in dieselbe Richtung abgewinkelt und zwar derart, daß sie mit ihrem unteren Ende weiter in den Weg der Artikel, welche über die Förderoberfläche bewegt werden, hineinragen. Dies ist in der US-PS-4.284.186, die am 18.August 1981 erteilt worden ist, offenbart. Jedoch sind bei der vorliegenden Konstruktion einige dieser Segmente in entgegengesetzter Richtung abgewinkelt. Diese so abgewinkelten Segmente 71 dienen zur Beschleunigung der Rotation von langgestreckten Artikeln, so daß sie alle in ihrer größten Dimension in Richtung der Artikelbewegung ausgerichtet sind, wenn sie vom Entmischer abgeladen werden. Diese entgegengesetzt abgewinkelten Schienensegmente 71 dienen zur Beschleunigung der Rotation der Artikel, die selbige zur Schaffung einer gleichmäßigen Achsenorientierung benötigen, wenn die Artikel den Entmischer verlassen. Dies ist wichtig, weil die Rate der Vorwärtsbewegung bei diesem Entmischer sehr viel größer ist als bei früheren Einheiten. Ebenso ist die Länge des Entmischers in bezug auf die Operationsgeschwindigkeit wesentlich geringer. Daher ist es notwendig gewesen, Mittel zur sehr schnellen positiven Ausrichtung der Artikel vorzusehen, wenn diese sich annähern und dann in den Strom der voll beschleunigten Artikel eintreten. Zur Lösung dieses Problems ist die umgekehrte Orientierung der gewinkelten Schienensegmente 71 als vorteilhaft erkannt worden.

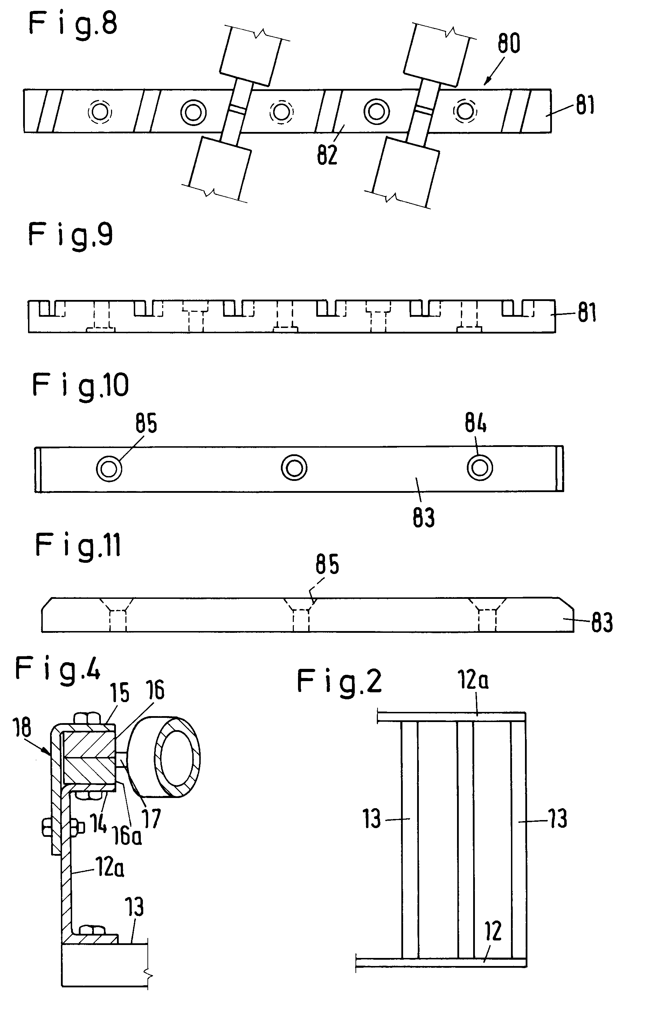

Zur Reduzierung von Geräuschen und zur Vereinfachung der Anordnung und der Funktion werden verlängerte Wellenlagerungen verwendet, um die konventionellen, einzelnen Wellenbefestigungen (Fig.8 bis 11) zu ersetzen. Zur Reduktion von Geräuschen sind diese Wellenbefestigungen 80 aus geeignetem Kunststoff wie Nylon geformt. Das Ergebnis ist ein langgestreckter, geformter Streifen 81, der eine Vielzahl von Wellenöffnungen 82 aufweist, in welchen entweder die Welle einer einzelnen Walze oder die Wellen von einem Paar ausgerichteter Walzen gelagert sind. Diese sind mit dem Rahmen des Förderers über geeignete Befestigungsmittel verbunden. Nachdem die Walzen plaziert worden sind, werden die Wellen befestigt, indem die Abdeckungsstreifen 83 installiert werden, welche ihrerseits dann über geeignete Befestigungsmittel 84, die in den Öffnungen 85 angebracht werden, befestigt werden. Wie aus Fig.5 ersichtlich wird, sind die Walzen räumlich sehr eng voneinander angeordnet, um einen maximalen Kontakt mit den Artikeln zu erzeugen. Dies ist wichtig, um den Walzen die schnelle Beschleunigung der Artikel auf die gewünschte Geschwindigkeit zu ermöglichen.

Aus den obigen Ausführungen wird verständlich, daß diese Erfindung einen Geschwindigkeits-Gleichrichter für Artikel mit hohen Geschwindigkeiten und einen Singulator mit reduzierter Länge schafft, welcher in der Lage ist, eine große Anzahl von Artikeln zu bearbeiten, ohne eine schädliche Beeinflussung in Form von Artikelbeschädigungen zwischen den Artikeln zu erzeugen, wenn diese beschleunigt und für das Abladen angeordnet werden. Es ist ebenso selbstverständlich, daß Modifikationen dieser Erfindung vorgenommen werden können, die als in den Ansprüchen offenbart betrachtet werden müssen, außer daß diese Ansprüche durch ihre Sprache ausdrücklich etwas anderes aussagen.

## Patentansprüche

1. Förderer zum Entmischen und Abladen von Artikeln, die von Seite-zu-Seite Quellen in zufälliger Ordnung und Orientierung aufgenommen werden, in einer einzelnen Reihe,
dadurch gekennzeichnet,
daß der Förderer ein Paar paralleler Seitenrahmenbauteile und eine Vielzahl von Walzen aufweist, welche in paralleler Beziehung zueinander eine Transportoberfläche für Artikel bilden, daß die Mittelachsen der Walzen parallel und abgeschrägt,zu den Seitenrahmenbauteilen ausgerichtet sind, daß eine Vielzahl von zwischenliegenden Walzenlagerungsrahmen räumlich von den Seitenrahmenbauteilen getrennt sind und sich in Längsrichtung zur Transportoberfläche erstrecken, daß ausgerichtete Walzen an jeder Seite von jedem der zwischenliegenden Rahmenbauteile vorgesehen sind, wobei die ausgerichteten Walzen an jeder Seite der dazwischenliegenden Rahmenbauteile getrennt und unabhängig von den Walzen auf den jeweils gegenüberliegenden Seiten sind, daß einige der zwischenliegenden Rahmenbauteile parallel zu den Seitenrahmenbauteilen sind, daß die zwischenliegenden Rahmenbauteile die Transportoberfläche des Förderers für die Artikel in eine Vielzahl von Transportzonen für die Artikel aufteilen, wobei eine der Transportzonen am Aufnahmeende des Förderers für die Artikel eine Breite aufweist, welche ein kleiner Bereich der gesamten Breite des Förderers ist und daß Mittel die darin befindlichen Walzen mit einer peripheren Geschwindigkeit antreiben, die höher ist als diejenige Geschwindigkeit der Walzen, welche die verbleibenden Teilbereiche der Transportoberfläche für die Artikel bilden.

2. Förderer zum Entmischen und Abladen von Artikeln, die von Seite-zu-Seite Quellen in zufälliger Ordnung und Orientierung aufgenommen werden, in einer einzelnen Reihe,
dadurch gekennzeichnet,
daß der Förderer ein Paar paralleler Seitenrahmenbauteile und eine Vielzahl von Walzen aufweist, welche in paralleler Beziehung zueinander eine Transportoberfläche für Artikel bilden, daß die Mittelachsen der Walzen abgeschrägt zu den Achsen der Seitenrahmenbauteilen ausgerichtet sind, daß eine Vielzahl von zwischenliegenden Walzenlagerungsrahmen räumlich getrennt sind und sich in Längsrichtung zur Transportoberfläche erstrecken, daß ausgerichtete Walzen an jeder Seite von jedem der zwischenliegenden Rahmenbauteile vorgesehen sind, wobei die Walzen an jeder Seite der dazwischenliegenden Rahmenbauteile getrennt und unabhängig von den Walzen auf den jeweils gegenüberliegenden Seiten sind, daß einige der zwischenliegenden Rahmenbauteile parallel zu den Seitenrahmenbauteilen sind, daß die zwischenliegenden Rahmenbauteile das Artikel-Aufnahmeende der Transportoberfläche des Förderers für die Artikel in eine Vielzahl von Transportzonen für die Artikel aufteilen, wobei eine der Transportzonen am Aufnahmeende des Förderers für die Artikel eine Breite aufweist, welche ein kleiner Bereich der gesamten Breite des Förderers ist und daß Mittel die darin befindlichen Walzen mit einer peripheren Geschwindigkeit antreiben, die höher ist als diejenige Geschwindigkeit der Walzen, welche die verbleibenden Teilbereiche der Transportoberfläche für die Artikel bilden.

3. Förderer nach Anspruch 2, dadurch gekennzeichnet,
daß ein Segment eines zwischenliegenden Rahmens am Abladeende dieses zwischenliegenden Rahmens angeordnet ist, wobei das Segment eine Vielzahl von Walzenachsen kreuzt und parallel zu den Seitenrahmenbauteilen ausgerichtet ist, um Artikel von denjenigen Artikeln wegzuführen, welche über Walzen in den Bereich des Förderersbetts geführt worden sind, welcher auf der Seite des letzteren zwischenliegenden Rahmens gegenüber von der einen Transportzone liegt.

4. Förderer nach Anspruch 2, dadurch gekennzeichnet,
daß eine Vielzahl dieser Segmente entlang der Seite der Transportoberfläche für die Artikel befestigt sind, welche die oberen Enden der Walzen stützen, wobei jedes der Segmente individuell über das benachbarte Seitenbauteil des Förderers an der Oberfläche des Förderers befestigt und über diese gelagert ist, daß einige der Segmente zur benachbarten Seite der Transportoberfläche für die Artilkel hin abgewinkelt sind, so daß die in Richtung der Artikelbewegung über die Oberfläche gesehenen unteren Enden der Segmente weiter von der benachbarten Seite des Förderers entfernt sind als deren obere Enden, daß andere Segmente zur benachbarten Seite der Oberfläche des Förderers derart abgewinkelt sind, daß das obere Ende am weitesten von der benachbarten Seite des Förderers entfernt ist.

5. Förderer nach Anspruch 4, dadurch gekennzeichnet,
daß die Segmente, deren untere Enden weiter von dem Seitenbauteil entfernt sind, in Gruppen angeordnet sind, welche jeweils eine Vielzahl dieser Segmente aufweisen.

6. Förderer nach Anspruch 5, dadurch gekennzeichnet,
daß diejenigen Segmente, deren untere Enden näher an der benachbarten Seite ausgebildet sind, zwischen diesen Gruppen angeordnet sind.

7. Förderer nach Anspruch 4, dadurch gekennzeichnet,
daß diejenigen der Segmente, welche benachbart zum Abladeende des entmischenden Förderers sind, parallel zu demjenigen des seitenrahmenbauteils sind und sich gegen dieses legen.

8. Förderer nach Anspruch 2, dadurch gekennzeichnet,
daß individuelle und getrennte Mittel vorgesehen sind, um jede Walzengruppe auf den entgegengesetzten Seiten der zwischenliegenden Walzenlagerungsrahmen mit unterschiedlichen Geschwindigkeiten anzutreiben, wobei die Geschwindigkeiten von jeder Gruppe größer sind als diejenige der sofort oberhalb Liegenden, um die Artikel in Längsrichtung des Förderers voneinander zu trennen.

9. Förderer nach Anspruch 2, dadurch gekennzeichnet,
daß alle Walzen, deren eines Ende benachbart zu der Seite des Förderers liegt, welche entfernt zu derjenigen Seite liegt, zu welcher die Artikel durch den Förderer bewegt werden, wenn sich dieser in Vorwärtsbewegung befindet, umkehrbare Antriebsmittel aufweisen, welche, wenn sie aktiviert werden, die darauf befindlichen Artikel zum einen Ende hin antreiben, das ansonsten das Ende für den Artikeleintritt ist, um die Artikel entlang dieser Seite des Förderers auszurichten.

10. Förderer zum Entmischen und Abladen von Artikeln, die von Seite-zu-Seite Quellen in zufälliger Ordnung und Orientierung aufgenommen werden, in einer einzelnen Reihe,
dadurch gekennzeichnet,
daß der Förderer ein Paar paralleler Seitenrahmenbauteile und eine Vielzahl von Walzen aufweist, welche alle in paralleler Beziehung zueinander angeordnet sind und eine Transportoberfläche für die Artikel bilden, daß die Mittelachsen der Walzen zur einseitig wirkenden Bewegung der Artikel zur einen Seite des Förderers zu den Seitensrahmenbauteilen hin schräggestellt sind, daß sich ein zwischenliegender Walzenlagerungsrahmen in Längsrichtung ,des Förderers erstreckt und räumlich von beiden Seiten des Förderers getrennt ist und zur Längsachse der Seiten des Förderers abgewinkelt ist und sich am Aufnahmeende des Förderers für die Artikel am nächsten zum benachbarten Seitenrahmenbauteil befindet, um vom Artikel-Aufnahmeende weg einen Transportweg für die Artikel mit progressiv ansteigender Breite zu bilden, daß sich ein Teilbereich des Lagerungsrahmens unten in Richtung der Artikelbewegung über die Transportoberfläche erstreckt, welche sich vom Aufnahmeende des Lagerungsrahmens im allgemeinen parallel zu den Seitenrahmenbauteilen erstreckt, um die auf dem letztgenannten Transportweg transportierten Artikel vom Weg derjenigen Artikel wegzuleiten, welche über denjenigen Bereich der Transportoberfläche bewegt werden, welcher sich zwischen dem Lagerungsrahmen und der gegenüberliegenden Seite des Seitenrahmenbauteils befindet.

11. Förderer zum Entmischen und Abladen von Artikeln, die von Seite-zu-Seite Quellen in zufälliger Ordnung und Orientierung aufgenommen werden, in einer einzelnen Reihe,
dadurch gekennzeichnet,
daß der Förderer ein Paar paralleler Seitenrahmenbauteile und eine Vielzahl von Walzen aufweist, welche in paralleler Beziehung zueinander eine Transportoberfläche für Artikel bilden, daß die Mittelachsen der Walzen abgeschrägt zu den Seitenrahmenbauteilen ausgerichtet sind, daß eine Vielzahl von zwischenliegenden Walzenlagerungsrahmen räumlich von den Seitenrahmenbauteilen getrennt sind und sich in Längsrichtung zur Transportoberfläche erstrecken, daß ausgerichtete Walzen an jeder Seite von jedem der zwischenliegenden Rahmenbauteile vorgesehen sind, wobei die ausgerichteten Walzen an jeder Seite der dazwischenliegenden Rahmenbauteile wirksam getrennt und unabhängig von den Walzen auf den jeweils gegenüberliegenden Seiten sind, daß die zwischenliegenden Rahmenbauteile die Transportoberfläche des Förderers für die Artikel in eine Vielzahl von Transportzonen für die Artikel aufteilen, daß eine Vielzahl von unabhängigen Antreibsmitteln vorgesehen ist, um die Walzen in jeder Transportzone für die Artikel mit einer jeweils unterschiedlichen Geschwindigkeit zu derjenigen Geschwindigkeit der Walzen in jeder der anderen Transportzonen anzutreiben, wobei eine der Transportzonen am Aufnahmeende des Förderers für die Artikel eine Breite aufweist, welche ein kleiner Bereich der gesamten Breite des Förderers ist und daß die darin befindlichen Walzen mit einer peripheren Geschwindigkeit angetrieben werden, die höher ist als diejenige Geschwindigkeit der Walzen, welche die verbleibenden Teilbereiche der Transportoberfläche für die Artikel bilden.

12. Förderer zum Entmischen und Abladen von in einer Reihe zufällig aufgenommenen Artikeln nach Anspruch 11, dadurch gekennzeichnet,
daß die Abwinkelung der Walzen zu den Seitenrahmenbauteilen die transportierten Artikel einseitig zu der Seite des Förderers bringt, welche anfangs die sich langsamer bewegenden Artikel transportiert, daß Mittel vorgesehen sind zur einseitigen Einstellung der Artikel in der einen Transportzone weg vom Eintritt in den Weg von denjenigen Artikeln, welche über ausgerichtete Walzen auf den gegenüberliegenden Seiten von einem der zwischenliegenden Rahmenbauteile bewegt werden und zwar in den Weg der Artikel hinein, welche mit einer geringeren Geschwindigkeit angetrieben werden, bis alle über die Achsen von ausgerichteten Walzen bewegten Walzen eine im wesentlichen gleiche Vorwärtsbewegung erreicht haben.

13. Förderer nach Anspruch 10, dadurch gekennzeichnet,
daß die Seite des Förderers, welche dem zwischenliegenden Walzenlagerungsrahmen am Artikel-Aufnahmeende am nächsten ist, ein hochstehendes Bandgestell aufweist, welches sich in Längsrichtung über einen Teil der Länge erstreckt, daß Mittel zur Umkehrung der Rotationsrichtung von allen Walzen, welche das Transportbett für die Artikel benachbart zu der einen Seite bilden, vorgesehen sind, um die Artikel in einer entgegengesetzten Richtung zu derjenigen Richtung zu transportieren, wenn die Einheit als Entmischer verwendet wird.

14. Förderer zum Entmischen und Abladen von Artikeln, die an einem Ende des Förderers aufgenommen worden sind, in einer einzigen Reihe nach Anspruch 11 dadurch gekennzeichnet,
daß alle zwischenliegenden Rahmenbauteile unter den oberen Oberflächen der Walzen verteilt sind, wobei die Artikel auf der Transportoberfläche, welche aus den oberen Bereichen der Walzen gebildet wird, bewegt werden können.

15. Förderer zum Entmischen und Abladen von Artikeln, die von mehreren Quellen in zufälliger Ordnung und Orientierung aufgenommen werden, in einer einzelnen Reihe,
dadurch gekennzeichnet,
daß der Förderer ein Paar paralleler Seitenrahmenbauteile und eine Vielzahl von Walzen aufweist, welche in paralleler Beziehung zueinander angeordnet sind und in einem kleinen Winkel zu den Seitenrahmenbauteilen eine Transportoberfläche für Artikel bilden, daß eine Vielzahl von zwischenliegenden Walzenlagerungsrahmen räumlich von den beiden Seitenrahmenbauteilen getrennt sind und sich in Längsrichtung zur Transportoberfläche erstrecken, daß ausgerichtete Walzen an jeder Seite von jedem der zwischenliegenden Rahmenbauteile vorgesehen sind, wobei die ausgerichteten Walzen an jeder Seite von jedem der dazwischenliegenden Rahmenbauteile getrennt und unabhängig von den Walzen auf den jeweils gegenüberliegenden Seiten sind, daß die zwischenliegenden Rahmenbauteile die Transportoberfläche des Förderers für die Artikel in eine Vielzahl von Transportzonen für die Artikel aufteilen, wobei die Walzen in jeder der letztgenannten Zonen der Oberfläche des Förderers mit einer unterschiedlichen peripheren Geschwindigkeit angetrieben werden, wobei eine der Transportzonen am Aufnahmeende des Förderers für die Artikel eine Breite aufweist, welche ein kleiner Bereich der gesamten Breite des Förderers ist und daß Mittel die darin befindlichen Walzen mit einer peripheren Geschwindigkeit antreiben, die höher ist als diejenige Geschwindigkeit der Walzen, welche die verbleibenden Teilbereiche der Transportoberfläche für die Artikel bilden.

16. Förderer zum Entmischen und Abladen von Artikeln, die von mehreren Quellen in zufälliger Ordnung und Orientierung aufgenommen werden, in einer einzelnen Reihe nach Anspruch 17,
dadurch gekennzeichnet,
daß sich die Oberflächen von allen Walzen in der gleichen Ebene befinden und daß sich die Kopfbereiche von allen zwischenliegenden Walzenlagerungsrahmen in einer Ebene unterhalb dieser gleichen Ebene befinden.

17. Förderer zum Entmischen und Abladen von Artikeln, die von mehreren Quellen in zufälliger Ordnung und Orientierung aufgenommen werden, in einer einzelnen Reihe nach Anspruch 17,
dadurch gekennzeichnet,
daß die durch all die Walzen transportierten Artikel dazu gebracht werden, sich in einer einzigen Reihe auszurichten, bevor sie das Abladeende der Transportoberfläche für die Artikel erreichen.
